(19) **Europäisches Patentamt**
**European Patent Office**
**Office européen des brevets**

(11) **EP 3 763 678 A1**

(12) **EUROPEAN PATENT APPLICATION**
published in accordance with Art. 153(4) EPC

(43) Date of publication:
**13.01.2021 Bulletin 2021/02**

(21) Application number: **19763429.8**

(22) Date of filing: **07.03.2019**

(51) Int Cl.:
*C01G 53/00* (2006.01)          *C22B 3/08* (2006.01)
*C22B 3/44* (2006.01)          *C22B 23/00* (2006.01)

(86) International application number:
**PCT/JP2019/009171**

(87) International publication number:
**WO 2019/172392 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.03.2018 JP 2018041314**

(71) Applicant: **SUMITOMO METAL MINING CO., LTD.**
**Tokyo**
**105-8716 (JP)**

(72) Inventors:
• **SUZUKI, Yukinori**
  **Tokyo 105-8716 (JP)**
• **SAITO, Daisuke**
  **Tokyo 105-8716 (JP)**
• **OISHI, Takao**
  **Tokyo 105-8716 (JP)**

(74) Representative: **Müller-Boré & Partner**
**Patentanwälte PartG mbB**
**Friedenheimer Brücke 21**
**80639 München (DE)**

(54) **METHOD FOR PRODUCING NI/CO SULFIDE AND SYSTEM FOR STABILIZING IRON GRADE**

(57)     Purpose of the present invention is to provide a method for achieving high Ni recovery rate N of a sulfide produced and for achieving low iron grade F. The method comprises: a process (S10) for subjecting the sulfuric acid aqueous solution (1) containing Ni and Co to a sulfurization reaction by a $H_2S$ gas (2); a process (S20) for recovering Ni and Co in a state of a sulfide; a process (S30) for recovering the $H_2S$ gas (2) in a state of a NaHS aqueous solution (5); and a process (S40) for adding the NaHS aqueous solution (5) to the sulfuric acid aqueous solution (1). The sulfurization reaction process (S10) further comprises a first reaction process (S11) for subjecting the sulfuric acid aqueous solution (1) to a sulfurization reaction by the $H_2S$ gas (2), and a second reaction process (S12) for subjecting the sulfuric acid aqueous solution (1) to a sulfurization reaction by the NaHS aqueous solution (5). In the NaHS aqueous solution addition amount adjusting process (S40), an addition flow rate (X) of the NaHS aqueous solution (5) with respect to a flow rate (Y) of the sulfuric acid aqueous solution (1) supplied to the second reaction process (S12) is controlled such that a control index (W) = X / Y ≤ 0.15% by volume.

FIG.5

## Description

Background of the Invention

Field of the Invention

The present invention relates to a method for producing a Ni/Co sulfide and a system for stabilizing an iron grade, and in more detail, the present invention relates to a method for producing a Ni/Co sulfide and a system for stabilizing an iron grade, wherein the iron grade of the sulfide is stabilized, when recovering valuable metals such as nickel and cobalt as the sulfide from a sulfuric acid aqueous solution containing the valuable metals by using a sulfurizing agent under pressure. This application is based upon and claims the benefit of priority from Japanese Patent Application No. 2018-041314 filed on March 7, 2018 in Japan, which is incorporated by reference herein.

Description of Related Art

Recently, in a field of nickel hydrometallurgy with nickel oxide ore as a raw material, a recovery of valuable metals from low nickel grade ore by High Pressure Acid Leaching (HPAL) method using high temperature and high pressure is in practical use. About a recovery of valuable metals such as nickel and cobalt leached from nickel oxide ore by this HPAL method, a method for recovering the valuable metals as a sulfide by adding a sulfurizing agent such as a $H_2S$ (hydrogen sulfide) gas to a sulfuric acid aqueous solution containing the valuable metals (hereinafter, referred to as "Ni/Co mixed sulfuric acid aqueous solution" or simply as "sulfuric acid aqueous solution") under pressure is performed generally.

For example, in Patent Literature 1, as a method for performing a sulfurization reaction efficiently, a method for adjusting a pressure of a reaction vessel, a time of reaction, a pH of a reaction solution, an addition of a seed crystal, and else, is disclosed. Further, as one of a method for improving an efficiency of the sulfurization reaction, there is a method for adding NaHS ("Sodium Hydrosulfide", "Sodium Hydrogen Sulfide" or "Sodium Bisulfide") to the reaction vessel.

In more detail, unreacted $H_2S$ gas is recovered in a state of a NaHS aqueous solution obtained by absorbing the unreacted $H_2S$ gas in a NaOH aqueous solution, in order to reuse the unreacted $H_2S$ gas in a process for recovering a sulfide by using a plurality of reaction tanks, and the NaHS aqueous solution is returned to a sulfurization reaction process and added to the sulfuric acid aqueous solution during a sulfurization reaction, thereby the sulfurization reaction is adjusted.

According to such method, in other words, by a method for improving an efficiency of the sulfurization reaction, a decrease of pH in the sulfurization reaction is inhibited, and a concentration of nickel and cobalt in a reaction final solution is maintained to be low. In other words, according to this method, the valuable metals such as nickel and cobalt are recovered as the sulfide with high efficiency.

Recovered nickel mixed sulfide is used as a raw material for purifying nickel sulfate and electrolytic nickel with high purity. High purity means a quality in which a content of impurities such as iron is controlled to be a predetermined level or less. By the way, in a refining plant of nickel sulfate and electrolytic nickel, iron is removed by using chemicals, so when an amount of iron contained in the nickel mixed sulfide is high, a consumption of chemicals will be high, and a production quantity of nickel sulfate and electrolytic nickel will be decreased as time and labor are required for removing iron. Therefore, it was desired to obtain the nickel mixed sulfide with low iron in the sulfurization reaction process.

When performing leaching from nickel oxide ore by using HPAL method, not only valuable metals such as nickel and cobalt, but also, impurities such as iron, chromium, manganese, magnesium will be leached simultaneously. In a process for precipitating and recovering the valuable metals such as nickel and cobalt as a sulfide from a leachate by a sulfurization reaction (sulfurization reaction process), iron contained in the leachate is also precipitated, so a technology to control an iron grade contained in the sulfide produced to be low as possible has been required.

Patent Literature 1: JP 2010-126778

Summary of the Invention

Here, the present invention is invented considering such problems, and a purpose of the present invention is to provide a method for producing a Ni/Co sulfide and a system for stabilizing an iron grade capable of stably maintaining low iron grade, and also, maintaining high nickel recovery rate (hereinafter, referred to as "Ni recovery rate") in a sulfide (hereinafter, referred to as "mixed sulfide" or simply "sulfide") produced by a process for recovering nickel and cobalt as the sulfide from a sulfuric acid aqueous solution containing iron as impurities, in addition to nickel and cobalt (hereinafter, referred to as "Ni/Co"), by using a $H_2S$ gas under pressure.

In order to solve the above problems, one embodiment of the present invention is a method for producing a Ni/Co sulfide from a sulfuric acid aqueous solution containing nickel and cobalt, which is high pressure acid leached by using sulfuric acid from nickel oxide ore in a hydrometallurgical process, comprising: a sulfurization reaction process for subjecting the sulfuric acid aqueous solution to a sulfurization reaction by adding a $H_2S$ gas under pressure; a solid-liquid separation process for recovering nickel and cobalt in a state of a sulfide produced by the sulfurization reaction; a $H_2S$ recovery process for recovering excessive $H_2S$ gas in the sulfurization reaction in a state of a NaHS aqueous solution by absorbing the excessive $H_2S$ gas in a NaOH aqueous solution; and a NaHS aqueous solution addition amount adjusting process for returning the NaHS aqueous solution, which absorbed the excessive $H_2S$ gas, to the sulfurization reaction process and adding the NaHS aqueous solution to the sulfuric acid aqueous solution in reaction, wherein the sulfurization reaction process comprises at least a first reaction process and a second reaction process in an order of processes, in the first reaction process, the $H_2S$ gas is blown to the sulfuric acid aqueous solution to be subjected to a sulfurization reaction, in a reaction process of the second reaction process and after, the NaHS aqueous solution is added to the sulfuric acid aqueous solution to be subjected to a sulfurization reaction, and in the NaHS aqueous solution addition amount adjusting process, an addition flow rate X of the NaHS aqueous solution with respect to a flow rate Y of the sulfuric acid aqueous solution supplied to the reaction process of the second reaction process and after is controlled by a control unit such that a control index $W = X / Y$ will be 0.15% by volume or less.

In addition, other embodiment of the present invention comprises an iron grade detection process for detecting iron grade of the sulfide produced by the sulfurization reaction, wherein in the NaHS aqueous solution addition amount adjusting process, the control unit adjusts the addition flow rate X of the NaHS aqueous solution based on the iron grade detected by the iron grade detection process.

In addition, in other embodiment of the present invention, in the sulfurization reaction process, the control unit controls the iron grade of the sulfide to be 0.80% by mass or less.

In addition, in other embodiment of the present invention, a nickel recovery rate of the solid-liquid separation process is 98.0% or more.

In addition, other embodiment of the present invention is a system for stabilizing iron grade with respect to a sulfide produced by a hydrometallurgical process of nickel oxide ore, comprising: a pressurized reaction vessel for producing the sulfide by subjecting a sulfuric acid aqueous solution containing nickel and cobalt, which is high pressure acid leached by using sulfuric acid in the hydrometallurgical process of nickel oxide ore, to a sulfurization reaction by a $H_2S$ gas added under pressure; a Ni/Co recovery means for recovering nickel and cobalt in a state of the sulfide produced; a $H_2S$ gas recovery means for recovering excessive $H_2S$ gas in the sulfurization reaction of the pressurized reaction vessel in a state of a NaHS aqueous solution by absorbing the excessive $H_2S$ gas in a NaOH aqueous solution; a NaHS aqueous solution addition means for returning the NaHS aqueous solution which absorbed the excessive $H_2S$ gas to the pressurized reaction vessel and adding the NaHS aqueous solution to the sulfuric acid aqueous solution; an iron grade detection means for detecting an iron grade of the sulfide produced by the pressurized reaction vessel; and a control unit for controlling the NaHS aqueous solution addition means to adjust an addition flow rate X of the NaHS aqueous solution based on the iron grade detected by the iron grade detection means.

In addition, in other embodiment of the present invention, the pressurized reaction vessel is configured to comprise a first reaction tank and a second reaction tank in an order of process, the first reaction tank is having a function to subject the sulfuric acid aqueous solution to a sulfurization reaction by blowing the $H_2S$ gas to the sulfuric acid aqueous solution, a reaction tank of the second reaction tank and after is having a function to subject the sulfuric acid aqueous solution to a sulfurization reaction by adding the NaHS aqueous solution to the sulfuric acid aqueous solution, and the control unit controls an addition flow rate X of the NaHS aqueous solution with respect to a flow rate Y of the sulfuric acid aqueous solution supplied to the reaction tank of the second reaction tank and after such that a control index $W = X / Y$ will be 0.15% by volume or less.

According to the present invention, a method for producing a Ni/Co sulfide and a system for stabilizing an iron grade capable of stably maintaining low iron grade, and also, maintaining high nickel recovery rate in the sulfide produced, are provided.

Brief Description of the Drawings

Fig. 1 is a simple flow chart for explaining a process for producing a Ni/Co mixed sulfide from low grade nickel oxide ore by a hydrometallurgical process using HPAL method, as a technical premise of the present invention.
Fig. 2 is a block diagram for explaining a system for stabilizing an iron grade (hereinafter, referred to as "present system") relating to one embodiment of the present invention.
Fig. 3 is a graph illustrating a relation of a pH and concentrations in solution of various metal sulfides for explaining an easiness of production of metal sulfides with respect to reducing atmosphere.
Fig. 4 is a schematic view for explaining an example of a $H_2S$ recovery means used in the present system and a method for producing a Ni/Co sulfide (hereinafter, referred to as "present method") relating to one embodiment of the present invention.

Fig. 5 is a flow chart for explaining a main process of the present method, especially only a sulfurization process of Fig. 1 in detail.

Fig. 6 is a flow chart for explaining the process of Fig. 1 in more detail.

Detailed Description of the Invention

Hereinafter, explaining about a method for producing a Ni/Co sulfide (present method) and a system for stabilizing an iron grade (present system), by referring to the drawings. In addition, the present invention should not be limited by the following examples, and it can be modified optionally within a scope not deviating from a gist of the present invention.

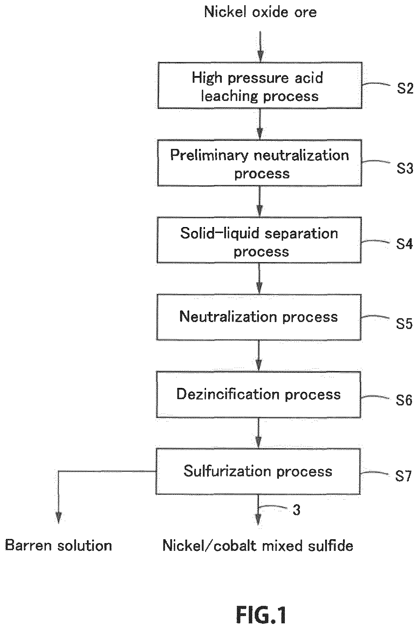

At first, before explanation of the present method, as its technical premise, explaining about a hydrometallurgical process of nickel oxide ore (hereinafter, referred to as simply "hydrometallurgical process") including the present method. This hydrometallurgical process is a hydrometallurgical process for leaching and recovering nickel and cobalt from nickel oxide ore, for example by HPAL method. Explaining from a technical premise of the present invention by using Fig. 1.

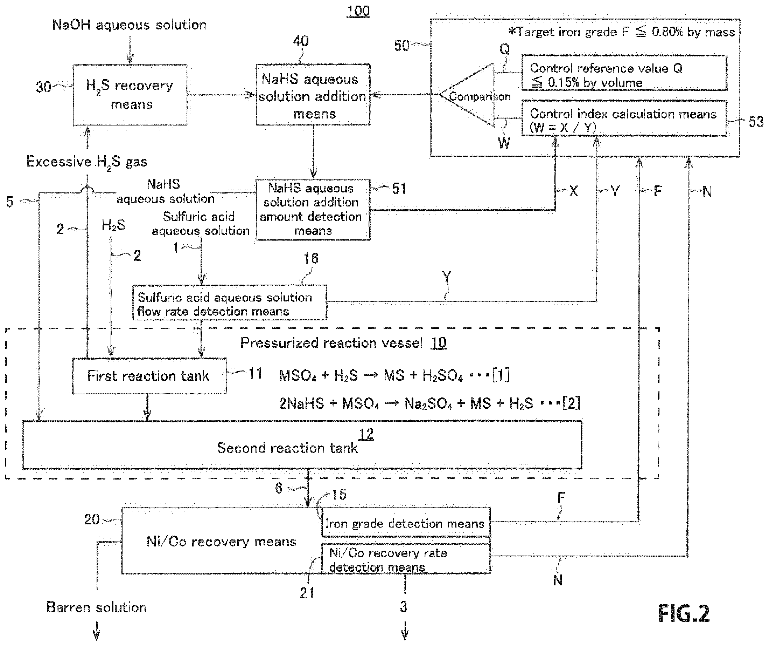

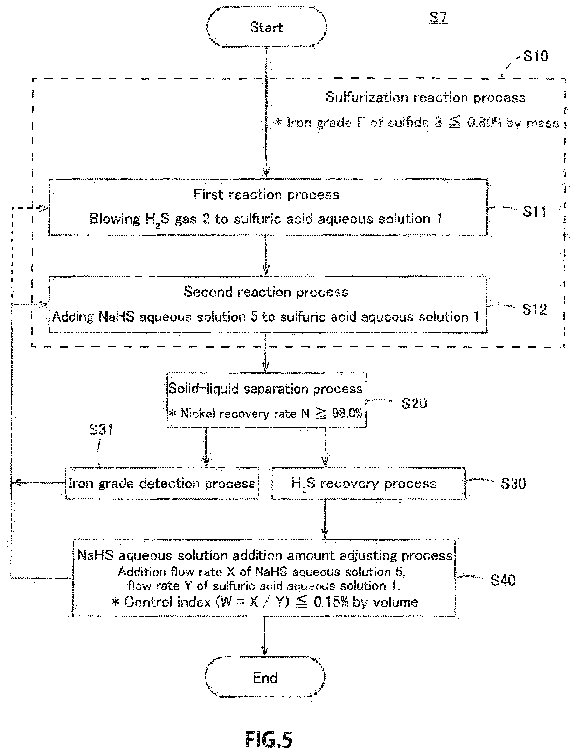

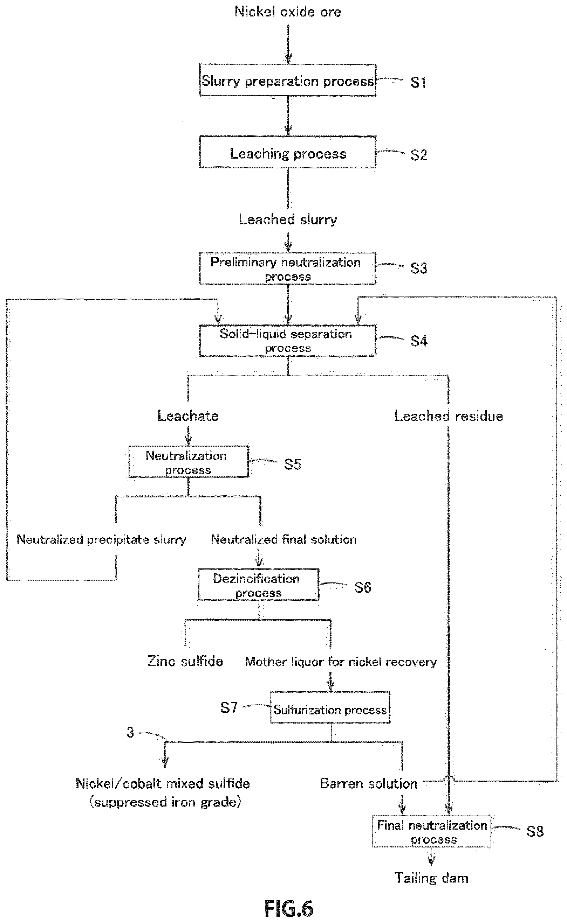

Fig. 1 is a simple flow chart for explaining a process for producing a Ni/Co mixed sulfide from low grade nickel oxide ore, as a technical premise of the present invention. In addition, Fig. 6 is a flow chart for explaining the process of Fig. 1 in more detail. As illustrated in Figs. 1 and 6, a hydrometallurgical process applying the present method is a hydrometallurgical process comprising: a slurry preparation process (S1); a high pressure acid leaching process (hereinafter, referred to as simply "leaching process") (S2); a preliminary neutralization process (S3); a solid-liquid separation process (S4); a neutralization process (S5); a dezincification process (S6); a sulfurization process (S7); and a final neutralization process (S8). The present method and the present system are having the leaching process (S2) by HPAL method as technical premise, and especially in the sulfurization process (S7), the present method is a method for producing a Ni/Co mixed sulfide in which an iron grade F (Fig. 2, Fig. 5) of the Ni/Co mixed sulfide (hereinafter, referred to as "sulfide produced" or simply as "sulfide") 3 is stably maintained in low grade.

In the slurry preparation process (S1), few types of nickel oxide ores are mixed, and then, mixed with water and classified to prepare an ore slurry. In the leaching process (S2), sulfuric acid is added to the obtained slurry of nickel oxide ore and a leaching treatment is performed at high temperature and under high pressure. In the preliminary neutralization process (S3), a pH of a leached slurry obtained in the leaching process (S2) is adjusted in a predetermined range. In the solid-liquid separation process (S4), a residue is separated while washing a pH adjusted leached slurry in multi-stages, and a leachate containing nickel and cobalt together with impurity elements is obtained.

In the neutralization process (S5), a pH of the leachate solid-liquid separated in the solid-liquid separation process (S4) is adjusted, and a neutralized precipitate containing impurity elements is separated to obtain a neutralized final solution containing nickel and cobalt together with iron. In the dezincification process (S6), a zinc sulfide is produced by adding a sulfurizing agent such as a $H_2S$ gas 2 to the neutralized final solution, and the zinc sulfide is separated and removed to obtain a mother liquor for nickel recovery containing nickel and cobalt.

In the sulfurization process (S7), a mixed sulfide containing nickel and cobalt is formed by adding the sulfurizing agent to the mother liquor for nickel recovery. In the final neutralization process (S8), a leached residue, to which free sulfuric acid is attached, transferred from the solid-liquid separation process (S4) and a filtrate (barren solution) containing impurities such as magnesium, aluminum, iron and the like transferred from the sulfurization process (S7) are neutralized. In addition, about detail of each process, it will be explained later using Fig. 6.

Fig. 2 is a block diagram for explaining a present system. A present system 100 illustrated in Fig. 2 is a system capable of stably maintaining the iron grade F in a specified level with respect to the sulfide 3 produced by the sulfurization process (S7) of the hydrometallurgical process of nickel oxide ore by HPAL. In other words, the present system 100 is a system for better controlling the process for producing the Ni/Co mixed sulfide in a state of the sulfide 3 (Fig. 1, Fig. 6) produced by the sulfurization reaction using the $H_2S$ gas 2 from a sulfuric acid aqueous solution (hereinafter, referred to as "reaction starting solution", or simply as "starting solution") 1 containing nickel and cobalt.

In addition, in the sulfurization process (S7) of Fig. 1, nickel and cobalt are recovered as the sulfide 3 from the sulfuric acid aqueous solution containing nickel and cobalt, by subjecting the sulfuric acid aqueous solution to a sulfurization reaction by using the $H_2S$ gas 2 under pressure. At this time, the present system 100 recovers excessive $H_2S$ gas 2 in this sulfurization process (S7) by a NaOH aqueous solution 4. A NaHS aqueous solution 5 obtained by the above process will be reused by adding the NaHS aqueous solution to the sulfurization process (S7).

As illustrated in Fig. 2, a main part of the present system 100 is configured to comprise a pressurized reaction vessel (hereinafter, also referred simply as "reaction vessel") 10, an iron grade detection means 15, a Ni/Co recovery means 20, a $H_2S$ recovery means 30, a NaHS aqueous solution addition means 40, a control unit 50, and a NaHS aqueous solution addition amount detection means 51.

The pressurized reaction vessel 10 is configured to comprise at least a first reaction tank 11 and a second reaction tank 12 connected serially in an order of process. This pressurized reaction vessel 10 produces a sulfide 3 (Fig. 1, Fig. 6) by subjecting a sulfuric acid aqueous solution 1 containing nickel and cobalt, which is high pressure acid leached by using sulfuric acid in a hydrometallurgical process of nickel oxide ore, to a sulfurization reaction by a $H_2S$ gas 2 added under pressure. Here, the sulfuric acid aqueous solution 1 containing nickel and cobalt is supplied to the pressurized reaction vessel 10. The sulfurization process (S7) is performed by supplying the starting solution 1 and the $H_2S$ gas 2 to the first reaction tank 11 located at uppermost stream side in the tanks used as the pressurized reaction vessel 10.

The $H_2S$ gas 2 with a purity of 95% to 99% is supplied to the first reaction tank 11 as a sulfurizing agent ($H_2S$ concentration is 95% to 100% by volume). In addition, in order to recover nickel and cobalt as a sulfide with high recovery rate, the sulfurizing agent is added excessively with respect to a required theoretical equivalent. Therefore, the $H_2S$ gas 2 which did not contribute to the sulfurization reaction of valuable metals will be excessive $H_2S$ gas 2, and it will be discharged to outside of the sulfurization reaction process.

The Ni/Co recovery means 20 recovers nickel and cobalt by solid-liquid separating the sulfide 3 produced. In this Ni/Co recovery means 20, the process is controlled such that a nickel recovery rate N will be 98.0% or more. Therefore, the excessive $H_2S$ gas 2 will be blown, especially into the first reaction tank 11, to promote the sulfurization reaction. The $H_2S$ recovery means 30 recovers the excessive $H_2S$ gas 2 in the sulfurization reaction of the first reaction tank 11 in a state of the NaHS aqueous solution 5 by absorbing the excessive $H_2S$ gas 2 in the NaOH aqueous solution 4.

In the sulfurization reaction process, in addition to the sulfurization reaction by the $H_2S$ gas 2 as indicated in a formula [1] below, a sulfurization reaction by sodium hydrosulfide as indicated in a formula [2] below occurs (in the formulas [1] and [2], M represents Ni, Co and Fe).

$$MSO_4 + H_2S \rightarrow MS + H_2SO_4 \cdots\cdots \qquad [1]$$

$$2NaHS + MSO_4 \rightarrow Na_2SO_4 + MS + H_2S \cdots\cdots \qquad [2]$$

The NaHS aqueous solution addition means 40 adds the NaHS aqueous solution 5 produced by absorbing the $H_2S$ gas 2 to the pressurized reaction vessel 10 to be subjected to a reaction with the sulfuric acid aqueous solution 1. The iron grade detection means 15 detects the iron grade F of the sulfide 3 produced by the pressurized reaction vessel 10. The control unit 50 controls an addition amount of the sulfurizing agent based on the iron grade F detected by the iron grade detection means 15. The addition amount of the sulfurizing agent increases as the iron grade F becomes lower, concretely, the NaHS aqueous solution addition means 40 adjusts an addition flow rate X of the NaHS aqueous solution 5. The NaHS aqueous solution addition amount detection means 51 is arranged at the pressurized reaction vessel 10, and detects the addition amount X of the NaHS aqueous solution 5.

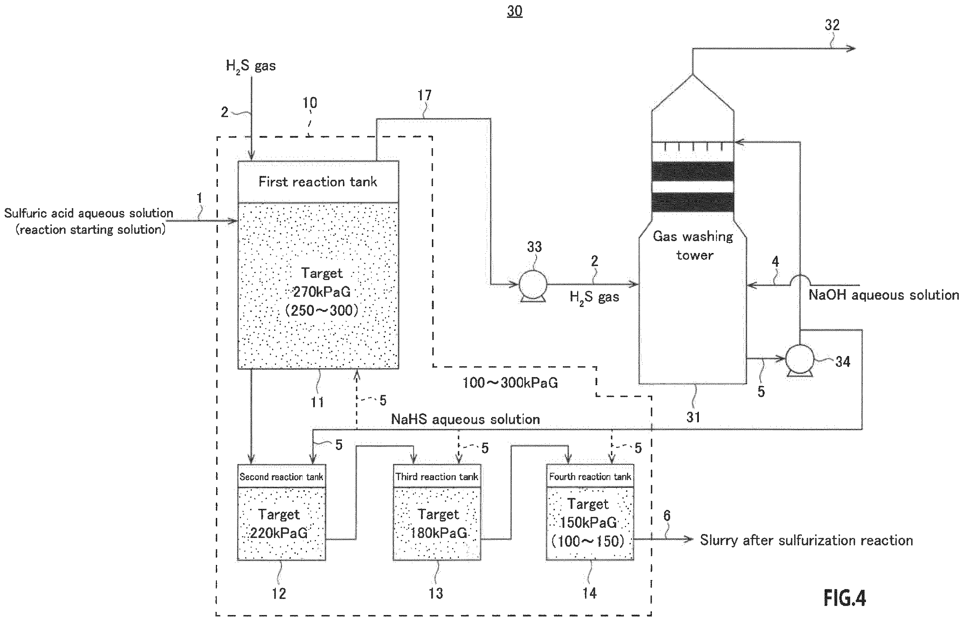

In addition, about the configuration of the pressurized reaction vessel 10, in Fig. 2, it is illustrated such that it is configured by two reaction tanks, i.e. by the first reaction tank 11 and the second reaction tank 12, but in Fig. 4, the configuration that four reaction tanks are connected serially, i.e. after a second reaction tank 12 connected to a first reaction tank 11, a third reaction tank 13 and a fourth reaction tank 14 are connected serially, is illustrated. As mentioned above, the first reaction tank 11 is having a function that the excessive $H_2S$ gas is blown to the sulfuric acid aqueous solution 1 to be subjected to the sulfurization reaction, and the reaction tanks of the second reaction tank 12 and after are mainly having a function that the NaHS aqueous solution 5 is added to the sulfuric acid aqueous solution 1 to be subjected to the sulfurization reaction.

In addition, the first reaction tank 11 and the second reaction tank 12 and after are not distinguished strictly about a sulfurizing agent to be added, and it can be used in combination according to need. A supply amount of the sulfurizing agent is controlled by distinguishing per type in the present method and the present system 100.

The control unit 50 is configured to comprise a computer arranged at unillustrated control panel and the like, and signals of a current or most recent situation detected by sensors arranged at each part of the present system 100 are input to the computer. The control unit 50 calculates the input signals, and contributes to a process control of the process by controlling unillustrated each actuator and the like properly.

The computer may be any of dedicated device or a device partially using a personal computer, and configured to comprise: a central processing unit (CPU); a program executed by the CPU; a storage device for storing the program in advance and writably and readably storing an operation signal and a data for process control accordingly; an input and output means by a monitor, a keyboard and the like. In addition, it goes without saying that the present system 100 can obtain an equivalent effect not only by a computer control, but also by a manual operation of an operator in a prescribed manner according to each detection result.

The control unit 50 is having a control index calculation means 53, and the control unit 50 controls to operate such that a control index W calculated by the control index calculation means 53 will be adapted to a control reference value Q set previously. In other words, the control unit 50 controls an addition flow rate X of the NaHS aqueous solution 5 such that the addition flow rate X of the NaHS aqueous solution 5 with respect to a flow rate (hereinafter, also referred to as "supply flow rate") Y of the sulfuric acid aqueous solution 1 supplied to a reaction tank of the pressurized reaction vessel 10 will be a control index W = X / Y, and that the control index W will be adapted to the control reference value

$Q \leq 0.15\%$ by volume.

Here, a numerical value of the addition flow rate X is detected in real time by the NaHS aqueous solution addition amount detection means 51 and input to the control unit 50. The control unit 50 controls the NaHS aqueous solution addition means 40 to maintain the control index $W = X / Y =$ the control reference value $Q \leq 0.15\%$ by volume, and also, controls the process by a feedback control to increase the amount according to an extent that the iron grade became lower than 0.80% by mass.

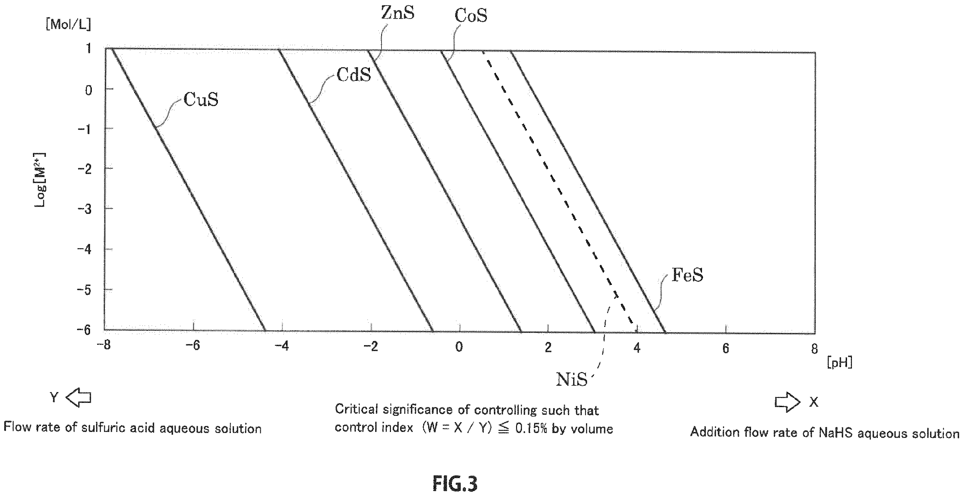

The control unit 50 executes a program of a process control such that the iron grade F of the sulfide 3 detected by the iron grade detection means 15 will be 0.80% by mass or less. Concretely, it is the control to be the control index $W = X / Y =$ the control reference value $Q \leq 0.15\%$ by volume, and it is achieved by inhibiting the sulfurization of the second reaction tank 12 and after accordingly. About this effect, it is explained later using Fig. 3.

In addition, about the iron grade detection means 15 and a Ni/Co recovery rate detection means 21, it is possible to use, for example a fluorescent X-ray analysis, an ICP emission spectrometry, or an atomic absorption spectrometry. As a result of keen examination using the detection means by such analysis, the inventors have found that the iron grade F of the sulfide 3 produced tends to increase when the addition flow rate X of the NaHS aqueous solution 5 is increased by using the NaHS aqueous solution 5 in the second reaction tank 12 and after.

In the first reaction tank 11, nickel and cobalt which are elements with low sulfide solubility are subjected to a sulfurization reaction with priority. In a next stage after the sulfurization of these nickel and cobalt has been progressed sufficiently, in other words, in the second reaction tank 12 and after, iron may be sulfurized. In order to inhibit sulfurization of iron, the NaHS aqueous solution with relatively low reducing action is added to the second reaction tank 12 and after, instead of a hydrogen sulfide ($H_2S$) gas. By the way, NaHS occurs a neutralization reaction as indicated in a formula [2.5] below in addition to the above formula [2], and a pH rises.

$$NaHS + H_2SO_4 \rightarrow NaHSO_4 + H_2S \cdots \cdots \qquad [2.5]$$

Fig. 3 is a graph illustrating a relation of a pH and concentrations in solution of various metal sulfides for explaining an easiness of production of metal sulfides with respect to reducing atmosphere. A horizontal axis of a graph illustrated in Fig. 3 indicates a pH of the sulfuric acid aqueous solution, and a vertical axis indicates a concentration of metal ions in the sulfuric acid aqueous solution. As the pH is higher, a sulfurizing agent produces the metal sulfides along with strong reducing action with respect to metal ions in the sulfuric acid aqueous solution. In order to prevent sulfurization of iron, it is required to inhibit a rise of pH and excessive addition of the sulfurizing agent, and this becomes possible by decreasing the addition flow rate X of the NaHS aqueous solution 5 to the second reaction tank 12 and after.

In Fig. 3, explaining schematically about a critical significance of controlling the addition flow rate X of the NaHS aqueous solution 5 with respect to the flow rate Y of the sulfuric acid aqueous solution 1 to be the control index $W = X / Y =$ the control reference value $Q \leq 0.15\%$ by volume. In lower part of Fig. 3, a thick arrow Y indicating a left direction corelates to a case when the flow rate Y of the sulfuric acid solution 1 is increased.

In lower part of Fig. 3, a thick arrow X indicating a right direction corelates to a case when the addition flow rate X of the NaHS aqueous solution 5 is increased. When a relative magnitude correlation between X value and Y value is biased to a Y (left) direction of Fig. 3, a production amount of both of NiS and FeS will be low.

Inversely, when a relative magnitude correlation between X value and Y value is biased to an X (right) direction of Fig. 3, a production amount of both of NiS and FeS will be high by a reducing action of $H_2S$ and NaHS. In this way, when a transition from left to right of Fig. 3 occurs, a production of NiS progresses and after the solution is diluted, it is considered that a production ratio of FeS will be increased.

In other words, when a Ni aqueous solution containing Fe as impurity is contacted with the $H_2S$ gas 2 in a condition of pH 3, NiS is produced along with a rise of pH as illustrated in a broken line of Fig. 3. Here, when a pH is rose excessively to the extent to be the control index $W >$ the control reference value Q, FeS is also produced as illustrated in a solid line of Fig. 3.

Therefore, excessive supply of the $H_2S$ gas 2 and excessive supply of the NaHS aqueous solution 5 will increase a concentration of FeS, and cause an increase of impurities. Inversely, when a pH is low to the extent to be the control index $W <$ the control reference value Q, a production of aimed NiS is also inhibited as illustrated in a broken line of Fig. 3, and Ni recovery rate N will also be low and a production efficiency will be low. By controlling the process such that it is maintained to be the control index $W = X / Y =$ the control reference value $Q \leq 0.15\%$ by volume, a target Ni recovery rate $N \leq 98.0\%$, and a target iron grade $F \leq 0.80\%$ by mass are achieved.

In addition, the nickel recovery rate N is calculated from a change of nickel concentration of the reaction starting solution and the reaction final solution, and it is defined as a formula [3] below.

Nickel recovery rate N = (volume of starting solution * nickel concentration of starting solution – volume of final solution * nickel concentration of final solution) / (volume of starting solution * nickel concentration of starting solution) ········· [3]

Fig. 4 is a schematic view for explaining an example of a $H_2S$ recovery means used in the present system and the present method. As illustrated in Fig. 4, a $H_2S$ recovery means 30 is configured by a first reaction tank 11, a gas washing tower 31, pipes including fluid pumps 33, 34, and the like, and it is a device for producing a NaHS aqueous solution 5 by absorbing a $H_2S$ gas 2 in a NaOH aqueous solution 4.

In Fig. 4, a reaction starting solution 1 composed of a sulfuric acid aqueous solution containing nickel and cobalt is introduced into a pressurized type first reaction tank 11. On the other hand, as a sulfurizing agent, the $H_2S$ gas 2 is supplied to the first reaction tank 11, and the NaHS aqueous solution 5 is supplied to a second reaction tank 12 (according to need, also to a third reaction tank 13 and a fourth reaction tank 14). As a result, a sulfurization reaction of nickel and cobalt occurs in the first reaction tank 11 to the fourth reaction tank 14, and a slurry 6 after the sulfurization reaction containing a Ni/Co mixed sulfide is discharged from an outlet port of the fourth reaction tank 14 in downstream.

Also, a discharge gas 17 containing the $H_2S$ gas 2 unreacted in the first reaction tank 11 is processed by the gas washing tower 31. In the gas washing tower 31, by absorbing harmful and useful $H_2S$ gas 2 in the NaOH aqueous solution 4, the NaHS aqueous solution 5 useful as a sulfurizing agent is obtained. Along with separating and recovering this useful component, detoxified gas is discharged to the atmosphere 32.

In addition, according to a situation, the method for producing the NaHS aqueous solution 5 can apply a first method to a third method in below. According to a first method, the NaHS aqueous solution 5 is produced by blowing the $H_2S$ gas 2 into the gas washing tower 31 until a pH of the NaOH aqueous solution 4 with 25% by mass becomes 13.7. According to a second method, the gas washing tower 31 is not required, and the NaHS aqueous solution 5 with a concentration of 7.45 mol/L is produced by diluting a reagent (NaHS) with water. In addition, a third method is an example of the second method being adjusted accordingly, and it is adjusted accordingly such that NaOH with a concentration of 0.51 mil/L is contained in the NaHS aqueous solution 5 with a concentration of 7.455 mol/L obtained by the second method. Even if it is the NaHS aqueous solution 5 formed by any of these first to third methods, it can be dissolved in a short time as sodium hydrosulfide is having a property with high water solubility.

A pressure in the first reaction tank 11 is preferably 100 to 300 kPaG, in order to progress the sulfurization reaction of nickel and cobalt. In addition, as the first reaction tank 11, it is effective to use by connecting in multi-stages, and in that case, it is preferable that a higher pressure is applied to an upstream side, in order to secure a substantial reaction time, and a pressure at the first reaction tank 11 of first stage will be 250 to 300 kPaG, and that a pressure is decreased gradually, and a pressure at the fourth reaction tank 14 of last stage will be 100 to 150 kPaG. By such pressure allocation, the sulfurization reaction by the $H_2S$ gas 2 is promoted efficiently.

Fig. 5 is a flow chart for explaining a main process of the present method, especially only a sulfurization process (S7) of Fig. 1 in detail. As illustrated in Fig. 5, the present method comprises and performs a sulfurization reaction process (S10), a solid-liquid separation process (S20), a $H_2S$ recovery process (S30), an iron grade detection process (S31), and a NaHS aqueous solution addition amount adjusting process (S40), as main processes. In addition, it is not necessary that each process (S10) to (S40) illustrated in Fig. 5 are performed strictly in an order as illustrated.

In the sulfurization reaction process (S10), the process is controlled such that the sulfide 3 is maintained to be iron grade F ≤ 0.80% by mass. Also, the sulfurization reaction process (S10) comprises a first reaction process (S11) and a second reaction process (S12). In addition, it is a necessary requirement that these first reaction process (S11) and second reaction process (S12) are performed in this order.

In the first reaction process (S11), it is subjected to a sulfurization reaction by blowing the $H_2S$ gas 2 to the sulfuric acid aqueous solution 1 in the first reaction tank 11. In the second reaction process (S12), the NaHS aqueous solution 5 is added as a sulfurizing agent instead of the $H_2S$ gas 2 with respect to the sulfuric acid aqueous solution 1 in the second reaction tank 12 to the fourth reaction tank 14.

In the solid-liquid separation process (S20), Ni and Co are recovered respectively by solid-liquid separating them in a state of the sulfide 3 from the sulfuric acid aqueous solution 1. Here, the process is controlled such that it will maintain a nickel recovery rate N ≧ 98.0% . In the $H_2S$ recovery process (S30), unreacted $H_2S$ gas 2 in the first reaction tank 11 is recovered in a state of the NaHS aqueous solution 5, in a manner explained using Fig. 4.

In the iron grade detection process (S31), an iron grade F of the sulfide 3 is detected. An amount of the NaHS aqueous solution 5 added in the second reaction process (S12) is controlled based on the iron grade F. A purpose of the control is to maintain the iron grade F stably low, and to maintain the Ni recovery rate N high in the sulfide 3 produced.

In the NaHS aqueous solution addition amount adjusting process (S40), from an addition flow rate X of the NaHS aqueous solution 5 and a flow rate Y of the sulfuric acid aqueous solution 1, the process is controlled to maintain a relation conforming to control index (W = X / Y) = control reference value Q $\leqq$ 0.15% by volume.

Fig. 6 is a flow chart for explaining the process of Fig. 1 in more detail. As illustrated also in Fig. 1, this hydrometallurgical process of nickel oxide ore is a hydrometallurgical process comprising the slurry preparation process (S1) to the final neutralization process (S8). Especially, the present system 100 and the present method maintain the iron grade F of the Ni/Co mixed sulfide stably low in the sulfurization process (S7). About a control method in the sulfurization process (S7), examples 1 and 2 relating to one embodiment of the present invention and comparative examples 1 and 2 are listed, and it is described about a performance of these examples later.

<Slurry preparation process>

In a slurry preparation process (S1), few types of nickel oxide ores are mixed to be a predetermined Ni grade and impurity grade, by using the nickel oxide ores which are raw material ores, and a water is added to the nickel oxide ores to be a slurry, and sieved to be classified at a predetermined classification point to removed oversized ore particles, and then, only undersized ores are used.

The nickel oxide ores used in the slurry preparation process (S1) are so-called laterite ores such as limonite ores and saprolite ores mainly. A nickel content of the laterite ores is normally 0.8% to 2.5% by mass, and nickel is contained as hydroxide or magnesia silicate (magnesium silicate) mineral. In addition, an iron content is 10% to 50% by mass, and it is in a form of trivalent hydroxide (goethite), but partially, bivalent iron is contained in magnesia silicate mineral. As the nickel oxide ores used in this slurry preparation process (S1), in addition to such laterite ores, oxide ores containing valuable metals such as nickel, cobalt, manganese and copper, for example manganese nodules present at a bottom of deep sea, may be used.

About a classification method of the nickel oxide ores, it is not limited particularly as long as it can classify ores based on a desired particle size, and for example, it can be performed by sieving using a general vibration sieve. Further, also about its classification point, it is not limited particularly, and a classification point for obtaining ore slurry composed of ore particles with desired particle size value or less can be set accordingly.

<Leaching process>

In a leaching process (S2), with respect to the nickel oxide ores, a leaching treatment is performed using the HPAL method. Concretely, sulfuric acid is added to the ore slurry obtained by crushing the nickel oxide ores which are raw material, and nickel, cobalt and the like are leached from the ores by pressurizing under high temperature condition of 220°C to 280°C, for example, by using high temperature pressurizing vessel (autoclave), to form a leached slurry composed of a leachate and a leached residue.

In the leaching treatment in this leaching process (S2), a leaching reaction and a high temperature hydrolysis reaction occur, and a leaching of nickel, cobalt and the like as sulfate, and a fixation of leached iron sulfate as hematite are performed. However, a fixation of iron ions does not progress completely, so normally, in a liquid part of obtained leached slurry, bivalent and trivalent iron ions are contained in addition to nickel, cobalt and the like.

As an addition amount of sulfuric acid in the leaching process (S2), it is not limited particularly, and an excessive amount such that irons in the ores will be leached is used.

<Preliminary neutralization process>

In a preliminary neutralization process (S3), a pH of the leached slurry obtained in the leaching process (S2) is adjusted in a predetermined range. In the leaching process (S2) for performing the leaching treatment by the HPAL method, excessive sulfuric acid is added from a point of view of improving a leaching rate. Therefore, excessive sulfuric acid which were not involved in a leaching reaction is contained in the obtained leached slurry, so its pH is extremely low. From this, in the preliminary neutralization process (S3), a pH of the leached slurry is adjusted to a predetermined range such that a washing will be performed efficiently at the time of multi-stage decantation in the next process of solid-liquid separation process (S4).

Concretely, the leached slurry used in the solid-liquid separation process (S4) is adjusted of its pH to about 2 to 6, preferably 2.5 to 3.4. When the pH is less than 2, a cost for making equipment of following processes to be acid resistant will be necessary. On the other hand, when the pH is more than 6, nickel leached in the leachate (slurry) precipitates in the process of washing and lost by accompanying a residue, and also, a washing efficiency may be decreased.

<Solid-liquid separation process>

In a solid-liquid separation process (S4), the leached slurry adjusted of its pH in the preliminary neutralization process (S3) is washed in multi-stages, and a leached residue and a leachate containing zinc and iron as impurity elements in addition to nickel and cobalt is obtained.

In the solid-liquid separation process (S4), after mixing the leached slurry with a washing liquid, a solid-liquid separation treatment is performed by arranging thickeners in multi-stages as a solid-liquid separation device. Concretely, at first, the leached slurry is diluted by the washing liquid, and then, the leached residue in the slurry is condensed as precipitate of the thickeners. Thereby, a nickel amount adhered to the leached residue is decreased according to a degree of its dilution. In addition, it is intended to improve a recovery rate of nickel and cobalt, by using and connecting such thickeners in multi-stages.

As a multi-stage decantation method in the solid-liquid separation process (S4), a counter current decantation (CCD) method to contact a washing liquid not containing nickel as countercurrent is used. Thereby, it is possible to eliminate a washing liquid newly introduced into the system, and also, a recovery rate of nickel and cobalt is improved.

As the washing liquid, a washing liquid which does not contain nickel and does not affect the process may be used. Among them, it is preferable to use an aqueous solution having a pH of 1 to 3. When a pH of the washing liquid is high, bulky aluminum hydroxide is produced when aluminum is contained in the leachate, and it will be a cause of defect in precipitation of the leached residue in the thickeners. From this, as the washing liquid, it is preferable to repeatedly use a barren solution of low pH (pH is about 1 to 3) obtained in a following process of a sulfurization process (S7).

<Neutralization process>

In a neutralization process (S5), a pH of the leachate separated in the solid-liquid separation process (S4) is adjusted, and a neutralized precipitate containing impurity elements is separated to obtain a neutralized final solution containing zinc and iron together with nickel and cobalt. More concretely, it is as described in below.

In the neutralization process (S5), a neutralizing agent such as calcium carbonate is added to the leachate. An addition amount of the neutralizing agent is adjusted such that a pH of the neutralized final solution obtained by neutralization will be 4 or less, preferably 3.0 to 3.5, more preferably 3.1 to 3.2.

In the neutralization process (S5), by performing such neutralization treatment to the leachate, excessive acid used in the leaching treatment by the HPAL method is neutralized, and the neutralized final solution which will be a source of a mother liquor for nickel recovery is produced. Here, at the same time of production of the neutralized final solution, impurities are removed as the neutralized precipitate. In this neutralized precipitate, impurities such as aluminum ions or trivalent iron ions remaining in the solution are formed as hydroxide. This neutralized precipitate may be returned to the solid-liquid separation process (S4) again.

<Dezincification process>

In a dezincification process (S6), zinc sulfide is formed by adding a sulfurizing agent such as a $H_2S$ gas to the neutralized final solution obtained from the neutralization process (S5), and the zinc sulfide is separated and removed to obtain a mother liquor for nickel recovery (dezincification final solution) containing nickel and cobalt. More concretely, it is as described in below.

For example, the neutralized final solution containing zinc together with nickel and cobalt is introduced into a pressurized vessel, and by blowing the $H_2S$ gas into a gas phase, zinc is selectively sulfurized with respect to nickel and cobalt, and zinc sulfide and the mother liquor for nickel recovery are produced.

<Sulfurization process>

In a sulfurization process (S7), the dezincification final solution which is the mother liquor for nickel recovery will be a sulfurization reaction starting solution, and a sulfurization reaction is generated by blowing the $H_2S$ gas 2 into the sulfurization reaction starting solution as a sulfurizing agent to produce the Ni/Co mixed sulfide, and a barren solution having scarce nickel and cobalt is removed.

A sulfurization treatment in the sulfurization process (S7) can be performed using a sulfurization reaction tank and the like, and with respect to the sulfurization reaction starting solution charged into the sulfurization reaction tank, the $H_2S$ gas 2 is blown into a gas phase in the sulfurization reaction tank, and a sulfurization reaction is generated by dissolving the $H_2S$ gas 2 in the solution.

By this sulfurization treatment, nickel and cobalt contained in the sulfurization reaction starting solution 1 are fixed as a mixed sulfide 3. After the end of sulfurization reaction, a slurry containing obtained nickel/cobalt mixed sulfide is charged into the solid-liquid separation device such as thickeners to perform a sedimentation treatment, and the mixed sulfide is separated and recovered.

In addition, a remaining component of aqueous solution is recovered as the barren solution by overflowing the barren solution from a top of the thickeners. The recovered barren solution is a solution with extremely low concentration of valuable metals such as nickel, and contains impurity elements such as manganese, magnesium, and iron remained without sulfurization. This barren solution will be transferred to a final neutralization process (S8) to be detoxified. Or, the barren solution may be used as the washing liquid in the solid-liquid separation process (S4).

<Final neutralization process>

In a final neutralization process (S8), the leached residue accompanying free sulfuric acid transferred from the solid-liquid separation process (S4) and a filtrate (barren solution) containing impurities such as magnesium, aluminum, and iron transferred from the sulfurization process (S7) are neutralized. The final neutralization process (S8) is a neutralization performed for wasting slurry from the hydrometallurgical process to outside, and it is a neutralization process performed at a last of the hydrometallurgical process.

The leached residue and the filtrate are adjusted to a predetermined pH range by a neutralizing agent to be a waste slurry (tailing). The tailing produced in this reaction tank is transferred to a tailing dam (waste storage site). Concretely, in the final neutralization process (S8), free sulfuric acid contained in the leached residue is neutralized completely, and impurities contained in the filtrate is fixed as hydroxide, and a slurry containing hydroxides of impurities is discharged to the tailing dam.

<Effective use of sulfurizing agent>

The present method is advantageous in a point that the sulfurizing agent can be used effectively, as it is explained in below.

The formulas [1] and [2] in the sulfurization process (S7) are hydrogen ion production reaction, so a pH decreases as the sulfurization reaction progresses, and a reaction rate will be decreased. Therefore, the sulfurizing agent were used excessively for achieving high Ni recovery rate N.

Here, by supplying recovered NaHS aqueous solution 5 to the second reaction tank 12 and after, a decrease of the reaction rate and the pH is inhibited by a neutralization reaction [2.5] of sulfuric acid ($H_2SO_4$) produced by the formula [1], and at the same time, the sulfide is produced by a supplemental sulfurization reaction by NaHS, so a used amount of the sulfurizing agent is inhibited. In addition, the $H_2S$ gas 2 generated by the formula [2] also contributes to the reaction effectively. In this way, discharged unreacted $H_2S$ gas 2 is used in the sulfurization reaction via NaHS, so a use efficiency of the $H_2S$ gas 2 improves significantly.

In the present method, as NaHS, an aqueous solution obtained by absorbing the unreacted $H_2S$ gas 2 discharged from the pressurized reaction vessel 10 when producing the sulfide 3 by the NaOH aqueous solution 4 is used. If a recycling is not considered important, commercially available alkali sulfide can be used. A method for absorbing the unreacted $H_2S$ gas 2 by the NaOH aqueous solution 4 is not limited particularly, and various normal devices excellent in reaction efficiency such as a gas absorbing tower or a washing tower (scrubber) using the NaOH aqueous solution 4 as an absorbent may be used.

Here, the $H_2S$ gas 2 in the discharge gas 17 forms the NaHS aqueous solution 5 according to a formula [4] below. A concentration of the NaHS aqueous solution 5 obtained at this time is not limited particularly, but a proper value indicated in below is preferable. In other words, a supply amount and a concentration of the NaOH aqueous solution 4 are adjusted, in order to sufficiently achieve a purpose of detoxication of the $H_2S$ gas 2 in the discharge gas 17. For example, by using the NaOH aqueous solution 4 with a concentration of 18% to 30% by mass, the NaHS aqueous solution 5 with a concentration of 20% to 35% by mass is obtained.

$$NaOH + H_2S \rightarrow NaHS + H_2O \cdots\cdots\cdots \qquad [4]$$

In this way, a target Ni recovery rate N $\leqq$ 98% can be obtained stably while inhibiting a used amount of the sulfurizing agent, so there is an advantage that a sulfurization of iron is also inhibited stably by inhibiting excessive addition of the sulfurizing agent. About a condition of the sulfurizing agent and the like, it is exemplified in below.

A supply amount of the sulfurizing agent used in the present method can be adjusted according to the iron grade F of the sulfide 3, and it is desirable to increase an addition amount of the sulfurizing agent according to a degree of the iron grade F which is below an upper limit (for example, 0.80% by mass) of the iron grade F. In addition, the addition amount of the sulfurizing agent is adjusted in a range of 1.0 to 1.1 times of a reaction equivalent required when sulfurizing nickel and cobalt contained in the sulfuric acid aqueous solution 1 containing nickel and cobalt, which is used as a reaction starting solution, according to the formula [1]. The excessive addition of the sulfurizing agent beyond this range increases the unreacted $H_2S$ gas 2 discharged from the first reaction tank 11 and increases a waste.

A pH of the sulfuric acid aqueous solution 1 used in the present method is preferably 3.0 to 3.5 for progressing the sulfurization reaction. In other words, when the pH of the sulfuric acid aqueous solution is less than 3.0, iron, aluminum, and the like are not removed sufficiently in the neutralization process of previous stage. On the other hand, when the pH of the sulfuric acid aqueous solution is more than 3.5, a production of hydroxides of nickel and cobalt is concerned.

A temperature of the sulfuric acid aqueous solution 1 used in the present method is preferably 65°C to 90°C. In other words, a sulfurization reaction itself is generally promoted as the temperature is higher, but when it is beyond 90°C, defects such that high cost will be incurred for rising the temperature, and that the sulfide 3 will be adhered to the pressurized reaction vessel 10 as the reaction rate is fast, tend to occur.

Examples

Hereinafter, explaining about an effect of the present invention in more detail by comparing examples of the present invention and comparative examples corresponding to the examples, and determination results are indicated in a table 1 below. In addition, in the examples and the comparative examples, reaction conditions were unified as below, an analysis with respect to metals in a solution was performed by an ICP emission spectrometry, and a measurement of impurity grade in a sulfide 3 was performed by a fluorescent X-ray elemental analysis. In addition, a concentration analysis of a $H_2S$ gas 2 was performed by a UV type measurement device.

A present system 100 indicated in Fig. 2 is configured to comprise a pressurized reaction vessel 10 illustrated in more detail of four stages in Fig. 4, and a gas washing tower 31 for producing a NaHS aqueous solution 5 from unreacted $H_2S$ gas 2 in a discharge gas 17. In addition, a present method using the present system 100 is performed in a sulfurization process (S7) illustrated in Figs. 1, 5 and 6.

In addition, in a normal operation, a composition and a supply flow rate Y of a reaction starting solution 1 introduced to the sulfurization process (S7) changes by a compositional change of a raw material ore, a leaching process (S2), a solid-liquid separation process (S4), a neutralization process (S5) and the like. However, evaluation of examples 1 and 2 and comparative examples 1 and 2 is performed by eliminating an effect of such changes as much as possible. Therefore, about the reaction starting solution 1 introduced to the sulfurization process (S7), the flow rate Y of introduction was maintained to approximately 400 to 450 m³/hr, and also, Ni concentration of the reaction starting solution 1 was maintained to approximately 3.7 to 4.0 g/L.

At this time, a concentration of the $H_2S$ gas 2 was set to 95% to 100% by volume (purity of 95% to 99%), a pH of the reaction starting solution 1 was set to 3.0 to 3.5, and a reaction temperature was set to 65°C to 90°C. In addition, a target value of an internal pressure of the pressurized reaction vessel 10 is set that a first reaction tank 11 of first stage is 270 kPaG, a second reaction tank 12 of second stage is 220 kPaG, a third reaction tank 13 of third stage is 180 kPaG, a fourth reaction tank 14 of fourth stage is 150 kPaG. In addition, an area of gas-liquid interface of the pressurized reaction vessel 10 is 100 to 120 m² in sum of four stages.

In any case relating to the examples 1 and 2 of the present invention and the comparative examples 1 and 2, the pressurized reaction vessel 10 in which four reaction tanks, i.e. first to fourth reaction tanks 11 to 14, were connected serially was used. Thereby, sulfurization reactions were performed continuously. Here, a flow rate for blowing in the $H_2S$ gas 2 was 650 to 750 m³/hr, and entire amount of the $H_2S$ gas 2 was blown into the first reaction tank 11. In addition, a NaHS aqueous solution 5 was recovered from a gas washing tower 31 with a concentration of 20% to 35% by mass, and the addition flow rate X was 1.0 to 1.5 m³/hr, and from which only an amount controlled in an addition ratio of a table 1 below was added to the second reaction tank 12, and a remaining amount (if any) was added to the first reaction tank 11.

[Table 1]

| | Addition flow rate X of NaHS aqueous solution 5 to second reaction tank 12 with respect to flow rate Y of starting solution (% by volume) | Nickel recovery rate N (%) | Iron grade F in sulfide 3 (% by mass) | Determination result |
|---|---|---|---|---|
| Example 1 | 0.05 | 98.3 | 0.68 | ◎ : Extremely good |
| Example 2 | 0.15 | 98.6 | 0.79 | ○ : Good |
| Comparative example 1 | 0.21 | 98.8 | 0.93 | × : Outside a scope of quality allowed |
| Comparative example 2 | 0.23 | 98.6 | 1.32 | × : Outside a scope of quality allowed |

[Example 1]

The addition flow rate X of the NaHS aqueous solution 5 in the second reaction tank 12 in the above reaction conditions was adjusted to 0.05% by volume of the flow rate Y of the starting solution, and remaining NaHS aqueous solution 5 was added to the first reaction tank 11. As a result, a nickel recovery rate N in entire sulfurization process was 98.3%, and an iron grade F of the sulfide 3 was 0.68% by mass, and an extremely good result was obtained, as indicated by a mark ⊚ in the table 1.

[Example 2]

The addition flow rate X of the NaHS aqueous solution 5 in the second reaction tank 12 in the above reaction conditions was adjusted to 0.15% by volume of the flow rate Y of the starting solution, and remaining NaHS aqueous solution 5 was added to the first reaction tank 11. As a result, a nickel recovery rate N in entire sulfurization process was 98.6%, and an iron grade F of the sulfide 3 was 0.79% by mass, and a good result was obtained, as indicated by a mark ○ in the table 1.

[Comparative example 1]

The addition flow rate X of the NaHS aqueous solution 5 in the second reaction tank 12 in the above reaction conditions was adjusted to 0.21% by volume of the flow rate Y of the starting solution, and remaining NaHS aqueous solution 5 was added to the first reaction tank 11. As a result, a nickel recovery rate N in entire sulfurization process was 98.8% and satisfied a requirement, but an iron grade F of the sulfide 3 was 0.93% by mass and it was high compared to the examples 1 and 2, so a result was outside a scope of a quality allowed, as indicated by a mark × in the table 1.

[Comparative example 2]

The addition flow rate X of the NaHS aqueous solution 5 in the second reaction tank 12 in the above reaction conditions was adjusted to 0.23% by volume of the flow rate Y of the starting solution, and remaining NaHS aqueous solution 5 was added to the first reaction tank 11. As a result, a nickel recovery rate N in entire sulfurization process was 98.6% and satisfied a requirement, but an iron grade F of the sulfide 3 was 1.32% by mass and it was high compared to the examples 1 and 2, so a result was outside a scope of a quality allowed, as indicated by a mark × in the table 1.
Determination results of the examples 1 and 2 with respect to the comparative examples 1 and 2 were as indicated in the table 1, and the examples 1 and 2, especially the example 1, were better than the comparative examples 1 and 2. As indicated in the table 1, according to the present system 100, and according to the present method using the present system 100, in a process for producing a sulfide containing nickel and cobalt by adding the $H_2S$ gas 2 under pressure as a sulfurizing agent to the sulfuric acid aqueous solution 1 containing nickel and cobalt, a highly efficient nickel recovery rate N is maintained, and also, an iron grade F of the sulfide 3 produced is maintained stably low to 0.80% by mass or less, by setting the addition flow rate X of the NaHS aqueous solution 5 to the second reaction tank 12 and after to be 0.15% by volume or less of the flow rate Y of supplied sulfuric acid aqueous solution 1 containing nickel and cobalt.
In this way, according to the present invention, a new method for controlling a process capable of controlling an iron grade F of a Ni/Co mixed sulfide more stably, and a system for achieving this method are configured. A load of removing impurities in a smelting process in which the sulfide produced by this method is a raw material can be decreased, so its industrial value is significantly high. In addition, an iron grade F will not be lowered unnecessarily by excessive addition of the $H_2S$ gas 2, so a nickel loss is decreased. This means that a used amount of expensive $H_2S$ gas 2 is also decreased.
In addition, it was explained in detail about one embodiment and each example of the present invention as the above, but it is easy for those who skilled in the art to understand that various modifications are possible without substantially departing from new matters and effects of the present invention. Therefore, all of such modified examples are included within the scope of the present invention.
For example, a term used at least once in the description or drawings together with a different term that is broader or the same in meaning can also be replaced by the different term in any place in the description or drawings. Further, the configurations of the method for producing the Ni/Co sulfide and the system for stabilizing the iron grade are not limited to those described in one embodiment and each example of the present invention, but may be carried out in various modifications.
As it is apparent from the above, the present invention can be used suitably in a sulfurization process for recovering nickel and cobalt as a sulfide from a mother liquor for nickel recovery obtained by separating impurities from a leachate obtained in a process for leaching at high temperature and under high pressure by adding a sulfuric acid to a slurry of nickel oxide ore, in a hydrometallurgical process by a HPAL method of nickel oxide ore.

Glossary of Drawing References

1 Sulfuric acid aqueous solution (reaction starting solution)
2 $H_2S$ gas
3 Sulfide
4 NaOH aqueous solution
5 NaHS aqueous solution
6 Slurry after sulfurization reaction
10 Pressurized reaction vessel
11 First reaction tank
12 Second reaction tank
13 Third reaction tank
14 Fourth reaction tank
15 Iron grade detection means
16 Sulfuric acid aqueous solution flow rate detection means
17 Discharge gas (including unreacted $H_2S$ gas 2)
20 Ni/Co recovery means
21 Ni/Co recovery rate detection means
30 $H_2S$ recovery means
31 Gas washing tower
32 Discharged to atmosphere
33, 34 Fluid pump
40 NaHS aqueous solution addition means
50 Control unit
51 NaHS aqueous solution addition amount detection means
53 Control index calculation means
100 System for stabilizing iron grade (present system)
F Iron grade
N Nickel recovery rate
Q Control reference value
X Addition flow rate (of NaHS aqueous solution 5)
Y Flow rate (of sulfuric acid aqueous solution 1)
S10 Sulfurization reaction process
S11 First reaction process
S12 Second reaction process
S20 Solid-liquid separation process
S30 $H_2S$ recovery process
S31 Iron grade detection process
S40 NaHS aqueous solution addition amount adjusting process
W Control index (= X / Y)

**Claims**

1. A method for producing a Ni/Co sulfide from a sulfuric acid aqueous solution containing nickel and cobalt, which is high pressure acid leached (HPAL) by using sulfuric acid from nickel oxide ore in a hydrometallurgical process, comprising:

   a sulfurization reaction process for subjecting the sulfuric acid aqueous solution to a sulfurization reaction by adding a $H_2S$ gas under pressure;
   a solid-liquid separation process for recovering nickel and cobalt in a state of a sulfide produced by the sulfurization reaction;
   a $H_2S$ recovery process for recovering excessive $H_2S$ gas in the sulfurization reaction in a state of a NaHS aqueous solution by absorbing the excessive $H_2S$ gas in a NaOH aqueous solution; and
   a NaHS aqueous solution addition amount adjusting process for returning the NaHS aqueous solution, which absorbed the excessive $H_2S$ gas, to the sulfurization reaction process and adding the NaHS aqueous solution to the sulfuric acid aqueous solution in reaction,

wherein the sulfurization reaction process comprises at least a first reaction process and a second reaction process in an order of processes,

in the first reaction process, the $H_2S$ gas is blown to the sulfuric acid aqueous solution to be subjected to a sulfurization reaction,

in a reaction process of the second reaction process and after, the NaHS aqueous solution is added to the sulfuric acid aqueous solution to be subjected to a sulfurization reaction, and

in the NaHS aqueous solution addition amount adjusting process, an addition flow rate X of the NaHS aqueous solution with respect to a flow rate Y of the sulfuric acid aqueous solution supplied to the reaction process of the second reaction process and after is controlled by a control unit such that a control index W = X / Y will be 0.15% by volume or less.

2. The method for producing the Ni/Co sulfide according to claim 1, further comprising an iron grade detection process for detecting an iron grade of the sulfide produced by the sulfurization reaction,

wherein in the NaHS aqueous solution addition amount adjusting process, the control unit adjusts the addition flow rate X of the NaHS aqueous solution based on the iron grade detected by the iron grade detection process.

3. The method for producing the Ni/Co sulfide according to claim 1, wherein in the sulfurization reaction process, the control unit controls the iron grade of the sulfide to be 0.80% by mass or less.

4. The method for producing the Ni/Co sulfide according to any of claims 1 to 3, wherein a nickel recovery rate of the solid-liquid separation process is 98.0% or more.

5. A system for stabilizing an iron grade with respect to a sulfide produced by a hydrometallurgical process of nickel oxide ore, comprising:

a pressurized reaction vessel for producing the sulfide by subjecting a sulfuric acid aqueous solution containing nickel and cobalt, which is high pressure acid leached (HPAL) by using sulfuric acid in the hydrometallurgical process of nickel oxide ore, to a sulfurization reaction by a $H_2S$ gas added under pressure;

a Ni/Co recovery means for recovering nickel and cobalt in a state of the sulfide produced;

a $H_2S$ gas recovery means for recovering excessive $H_2S$ gas in the sulfurization reaction of the pressurized reaction vessel in a state of a NaHS aqueous solution by absorbing the excessive $H_2S$ gas in a NaOH aqueous solution;

a NaHS aqueous solution addition means for returning the NaHS aqueous solution which absorbed the excessive $H_2S$ gas to the pressurized reaction vessel and adding the NaHS aqueous solution to the sulfuric acid aqueous solution;

an iron grade detection means for detecting an iron grade of the sulfide produced by the pressurized reaction vessel; and

a control unit for controlling the NaHS aqueous solution addition means to adjust an addition flow rate X of the NaHS aqueous solution based on the iron grade detected by the iron grade detection means.

6. The system for stabilizing the iron grade according to claim 5, wherein the pressurized reaction vessel is configured to comprise a first reaction tank and a second reaction tank in an order of process,

the first reaction tank is having a function to subject the sulfuric acid aqueous solution to a sulfurization reaction by blowing the $H_2S$ gas to the sulfuric acid aqueous solution,

a reaction tank of the second reaction tank and after is having a function to subject the sulfuric acid aqueous solution to a sulfurization reaction by adding the NaHS aqueous solution to the sulfuric acid aqueous solution, and

the control unit controls the addition flow rate X of the NaHS aqueous solution with respect to a flow rate Y of the sulfuric acid aqueous solution supplied to the reaction tank of the second reaction tank and after such that a control index W = X / Y will be 0.15% by volume or less.

7. The system for stabilizing the iron grade according to claim 5, wherein the control unit controls the iron grade of the sulfide to be 0.80% by mass or less.

8. The system for stabilizing the iron grade according to any of claims 5 to 7, wherein a nickel recovery rate is 98.0% or more in the Ni/Co recovery means.

Nickel oxide ore

↓

| High pressure acid leaching process | S2 |

↓

| Preliminary neutralization process | S3 |

↓

| Solid–liquid separation process | S4 |

↓

| Neutralization process | S5 |

↓

| Dezincification process | S6 |

↓

| Sulfurization process | S7 |

↓ 3

Barren solution    Nickel/cobalt mixed sulfide

# FIG.1

NaOH aqueous solution

100

*Target iron grade F ≦ 0.80% by mass

30 — H₂S recovery means

40 — NaHS aqueous solution addition means

50 — Comparison

Q — Control reference value Q ≦ 0.15% by volume

53 — Control index calculation means (W = X / Y)

W

Excessive H₂S gas

5

2

H₂S

2

NaHS aqueous solution

Sulfuric acid aqueous solution

1

51 — NaHS aqueous solution addition amount detection means

X    Y    F    N

16

Y

Sulfuric acid aqueous solution flow rate detection means

Pressurized reaction vessel 10

First reaction tank — 11    $MSO_4 + H_2S \rightarrow MS + H_2SO_4 \cdots [1]$

$2NaHS + MSO_4 \rightarrow Na_2SO_4 + MS + H_2S \cdots [2]$

12
Second reaction tank

6    15

20 — Ni/Co recovery means

Iron grade detection means

F

Ni/Co recovery rate detection means

21

N

Barren solution

3

FIG.2

EP 3 763 678 A1

FIG.3

FIG.4

30

H₂S gas

2

10

17

32

First reaction tank

Sulfuric acid aqueous solution
(reaction starting solution)

1

Target
270kPaG
(250〜300)

33

2

H₂S gas

Gas washing
tower

4

NaOH aqueous solution

34

11

5

100〜300kPaG

31

5

NaHS aqueous solution

5

5

5

Second reaction tank

Target
220kPaG

Third reaction tank

Target
180kPaG

Fourth reaction tank

Target
150kPaG
(100〜150)

6

Slurry after sulfurization reaction

12

13

14

EP 3 763 678 A1

$\underline{S7}$

```
         ┌─────────────┐
         │    Start    │
         └─────────────┘
                │                          ╭── S10
  ┌─ ─ ─ ─ ─ ─ ─│─ ─ ─ ─ ─ ─ ─ ─ ─ ─ ─ ─ ─ ─ ─ ─ ─ ─ ┐
  │             │   Sulfurization reaction process        │
  │             │   * Iron grade F of sulfide 3 ≦ 0.80% by mass │
  │             ▼                                          │
  │   ┌─────────────────────────────────────────┐         │
  │   │         First reaction process          │── S11   │
  │   │  Blowing H₂S gas 2 to sulfuric acid aqueous solution 1 │
  │   └─────────────────────────────────────────┘         │
  │             ▼                                          │
  │   ┌─────────────────────────────────────────┐         │
  │   │        Second reaction process          │── S12   │
  │   │ Adding NaHS aqueous solution 5 to sulfuric acid aqueous solution 1 │
  │   └─────────────────────────────────────────┘         │
  └─ ─ ─ ─ ─ ─ ─│─ ─ ─ ─ ─ ─ ─ ─ ─ ─ ─ ─ ─ ─ ─ ─ ─ ─ ┘
                ▼
       ┌──────────────────────────┐
       │ Solid-liquid separation process │── S20
       │ * Nickel recovery rate N ≧ 98.0% │
       └──────────────────────────┘
          S31      │         │
   ┌──────────────┐│         │┌──────────────────┐
   │ Iron grade detection process │   │ H₂S recovery process │── S30
   └──────────────┘         └──────────────────┘
                                      ▼
       ┌──────────────────────────────────────────┐
       │ NaHS aqueous solution addition amount adjusting process │── S40
       │   Addition flow rate X of NaHS aqueous solution 5,  │
       │      flow rate Y of sulfuric acid aqueous solution 1, │
       │   * Control index (W = X / Y) ≦ 0.15% by volume │
       └──────────────────────────────────────────┘
                     ▼
            ┌─────────────┐
            │     End     │
            └─────────────┘
```

**FIG.5**

Nickel oxide ore

Slurry preparation process — S1

Leaching process — S2

Leached slurry

Preliminary neutralization process — S3

Solid-liquid separation process — S4

Leachate

Leached residue

Neutralization process — S5

Neutralized precipitate slurry     Neutralized final solution

Dezincification process — S6

Zinc sulfide     Mother liquor for nickel recovery

S7 — Sulfurization process

3

Nickel/cobalt mixed sulfide (suppressed iron grade)     Barren solution

Final neutralization process — S8

Tailing dam

**FIG.6**

| INTERNATIONAL SEARCH REPORT | International application No. |
|---|---|
| | PCT/JP2019/009171 |

**A. CLASSIFICATION OF SUBJECT MATTER**
Int.Cl.　C01G53/00(2006.01)i, C22B3/08(2006.01)i, C22B3/44(2006.01)i,
　　　　　C22B23/00(2006.01)i

According to International Patent Classification (IPC) or to both national classification and IPC

**B. FIELDS SEARCHED**

Minimum documentation searched (classification system followed by classification symbols)
Int.Cl. C01G53/00, C22B3/08, C22B3/44, C22B23/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2017-141499 A (SUMITOMO METAL MINING CO., LTD.)<br>17 August 2017, example 1, paragraph [0036] & WO<br>2017/138421 A1 & AU 2017218246 A & CU 20180089 A | 1, 3, 4<br>2, 5-8 |
| Y<br>A | JP 2016-194124 A (SUMITOMO METAL MINING CO., LTD.)<br>17 November 2016, paragraphs [0025], [0037]–[0038]<br>& US 2018/0105896 A1, paragraphs [0028], [0040]–<br>[0041] & WO 2016/157629 A1 & EP 3279344 A1 & CA<br>2980523 A & AU 2015389766 A & CN 107429317 A | 1, 3, 4<br>2, 5-8 |
| P, X | JP 2018-141179 A (SUMITOMO METAL MINING CO., LTD.)<br>13 September 2018, examples 1, 2 & WO 2018/155114<br>A1 | 1, 3, 4 |

☐ Further documents are listed in the continuation of Box C.　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 24 April 2019 (24.04.2019) | 14 May 2019 (14.05.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 763 678 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018041314 A

- JP 2010126778 A